(19) Europäisches Patentamt
European Patent Office
Office européen des brevets

(11) EP 3 365 160 B1

(12) **FASCICULE DE BREVET EUROPEEN**

(45) Date de publication et mention de la délivrance du brevet:
**31.07.2019 Bulletin 2019/31**

(21) Numéro de dépôt: **16809916.6**

(22) Date de dépôt: **21.10.2016**

(51) Int Cl.:
***B29C 70/44*** *(2006.01)* ***B29C 70/46*** *(2006.01)*

(86) Numéro de dépôt international:
**PCT/FR2016/052726**

(87) Numéro de publication internationale:
**WO 2017/068294 (27.04.2017 Gazette 2017/17)**

(54) **PROCEDE DE FABRICATION D'UNE TUYERE DE PROPULSEUR EN MATERIAU COMPOSITE**

VERFAHREN ZUR HERSTELLUNG EINER SCHUBDÜSE AUS VERBUNDSTOFF

METHOD FOR PRODUCING A THRUSTER NOZZLE FROM COMPOSITE MATERIAL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.10.2015 FR 1560070**

(43) Date de publication de la demande:
**29.08.2018 Bulletin 2018/35**

(73) Titulaires:
- **ARIANEGROUP SAS**
  **75015 Paris (FR)**
- **Centre National de la Recherche Scientifique**
  **75016 Paris (FR)**

(72) Inventeurs:
- **FOYER, Gabriel**
  **33700 Merignac (FR)**
- **FRANCOIS, Dominique**
  **33160 Saint Medard En Jalles (FR)**
- **DAVID, Ghislain**
  **34080 Montpellier (FR)**
- **CAILLOL, Sylvain**
  **34090 Montpellier (FR)**

(74) Mandataire: **Cabinet Beau de Loménie**
**158, rue de l'Université**
**75340 Paris Cedex 07 (FR)**

(56) Documents cités:
**JP-A- 2010 242 671**
**US-A- 4 495 231**
**US-A- 5 609 806**
**US-A1- 2006 118 232**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 365 160 B1

## Description

Arrière-plan de l'invention

L'invention concerne un procédé de fabrication d'une tuyère de propulseur à partir d'une résine phénolique. Le domaine d'application de l'invention est plus particulièrement celui des tuyères pour moteurs fusées ou moteurs aéronautiques.

Il est connu de réaliser des tuyères de propulseurs à partir de résines phénoliques de type résole, par exemple à partir de résine ablative telle que la résine Ablaphène RS101. Les résines phénoliques utilisées pour cette application doivent présenter d'excellentes propriétés de stabilité thermique et de charbonnement.

Les résines phénoliques telles que la résine Ablaphène RS101 sont synthétisées à partir de formaldéhyde et de phénol. Il est connu que le formaldéhyde est très réactif vis-à-vis du phénol. Les résines phénoliques synthétisées à partir de ces deux composés présentent de hautes densités aromatiques et de hautes densités de réticulation, lesquelles confèrent aux résines les propriétés de stabilité thermique et de charbonnement recherchées.

Toutefois le formaldéhyde et le phénol sont des composés classés Cancérigène Mutagène Reprotoxique (CMR) de catégorie 1B et 2 respectivement.

Du fait de sa toxicité, le formaldéhyde est un composé chimique dont l'utilisation devient strictement réglementée par la législation CMR.

Plusieurs travaux de synthèse de résines phénoliques sans formaldéhyde ont été menés. Le formaldéhyde est alors substitué par des composés aldéhyde tels que le glyoxal [E.C. Ramires, J.D. Megiatto, C. Gardrat, A. Castellan, E. Frollini, Biobased composites from glyoxal-phenolic resins and sisal fibers, Bioresour. Technol., 101 (2010) 1998-2006.] ou le furfural [L.H. Brown, Resin-forming reactions of furfural and phenol, J. Ind. Eng. Chem., 44 (1952) 2673-2675.] par exemple. Ces composés sont moins réactifs que le formaldéhyde et peuvent conduire à l'obtention de résines phénoliques présentant des propriétés de stabilité thermique et de charbonnement insuffisantes pour la réalisation de pièces aéronautiques comme des tuyères de propulseurs. De plus, ces composés, bien que moins toxiques que le formaldéhyde, sont néanmoins classés CMR 2.

On connait par ailleurs JP 2010 242671 qui divulgue une aube en matériau composite, US 2006/0118232 et US 4 495 231 qui divulguent la fabrication de pièces en matériau composite ainsi que US 5 609 806 qui décrit la fabrication d'un produit fibreux pré-imprégné de résine.

Il existe donc un besoin pour disposer de nouveaux procédés de fabrication de tuyères de propulseurs permettant de s'affranchir de l'utilisation du formaldéhyde.

Il existe encore un besoin pour disposer de nouveaux procédés de fabrication de tuyères de propulseurs formées de matériaux présentant des propriétés de stabilité thermique et de charbonnement améliorées par rapport à l'Ablaphène RS101.

Objet et résumé de l'invention

A cet effet, l'invention propose, selon un premier aspect, un procédé de fabrication d'une tuyère de propulseur en matériau composite, le procédé comprenant au moins les étapes suivantes :

- formation d'une préforme fibreuse de la tuyère à obtenir imprégnée par une résine phénolique pré-polymérisée, la résine phénolique pré-polymérisée étant obtenue par pré-polymérisation d'un composé aldéhyde mono-aromatique avec un composé phénolique différent d'un alcool hydroxybenzylique, le composé aldéhyde mono-aromatique ayant la formule suivante :

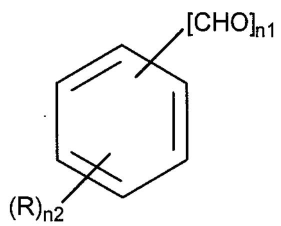

formule dans laquelle n1 est un entier compris entre 1 et 3, n2 est un entier compris entre 0 et 5 et, lorsque n2 est supérieur ou égal à 2, les substituants R sont identiques ou différents, formule dans laquelle R est choisi parmi : -COOH, les groupements -O-Alk où Alk désigne une chaîne alkyle substituée ou non substituée de 1 à 4 atomes de carbone, les chaînes hydrocarbonées comprenant entre 1 et 20 atomes de carbone, saturées ou insaturées,

substituées ou non substituées et présentant éventuellement une ou plusieurs fonctions carbonyle ou acide carboxylique, et

- cuisson de la préforme fibreuse imprégnée de manière à réticuler la résine phénolique pré-polymérisée et obtenir la tuyère de propulseur.

Par composé phénolique, il faut comprendre une molécule organique comprenant au moins un noyau benzénique auquel est rattaché au moins un groupement hydroxyle (-OH).

Le composé phénolique est différent d'un alcool hydroxybenzylique, c'est-à-dire qu'il ne présente pas une formule du type :

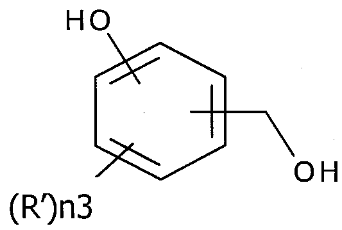

où R' désigne un substituant quelconque et n3 un entier compris entre 0 et 4.

Durant l'étape de pré-polymérisation, il y a addition du composé phénolique sur le composé aldéhyde mono-aromatique afin de former des produits d'addition lesquels vont subir une condensation afin d'obtenir la résine phénolique pré-polymérisée. Cette étape aboutit à une résine phénolique qui constitue un pré-polymère dans la mesure où celle-ci présente des groupes réactifs lui permettant de participer à une réaction de réticulation ultérieure afin de former une résine phénolique de type résite.

L'invention propose avantageusement une méthode de fabrication d'une tuyère de propulseur à base d'une résine phénolique présentant des propriétés de stabilité thermique et de charbonnement équivalentes voire supérieures à celles de la résine Ablaphène RS 101 et sans mise en oeuvre de formaldéhyde.

La préforme fibreuse peut par exemple comporter des fibres de carbone, de silice, de verre ou d'un matériau céramique, par exemple de carbure de silicium.

La préforme fibreuse est destinée à former le renfort fibreux de la tuyère en matériau composite et peut être formée de diverses manières connues en soi. On peut ainsi en particulier draper des couches de tissu bi-dimensionnel ou tri-dimensionnel imprégnées par la résine phénolique pré-polymérisée sur une forme ayant une surface reproduisant la géométrie désirée d'une surface interne ou externe de la tuyère à réaliser afin d'obtenir la préforme imprégnée. En variante, on peut obtenir par tissage la préforme fibreuse de la tuyère à obtenir puis placer cette préforme dans une cavité d'injection et injecter ensuite la résine pré-polymérisée ou le mélange aldéhyde mono-aromatique/composé phénolique avant pré-polymérisation dans la cavité de manière à imprégner la préforme. Dans ce cas, on peut mettre en oeuvre une technique de moulage par transfert de résine (« Resin Transfer Molding »). Lorsque l'on injecte un mélange aldéhyde monoaromatique/composé phénolique dans la porosité de la préforme fibreuse, la pré-polymérisation est effectuée in situ directement dans la porosité de la préforme fibreuse.

De préférence, n1 peut être égal à 2 ou à 3.

Dans ce cas, les fonctions aldéhyde s'activent mutuellement grâce à leur effet électro-attracteur et présentent donc une réactivité particulièrement élevée. Un tel exemple de réalisation permet avantageusement d'améliorer encore les propriétés de charbonnement des résines obtenues et de réduire les temps de cuisson nécessaires à la fabrication de la tuyère de propulseur.

De manière particulièrement préférée, n1 peut être égal à 2.

De préférence, n2 peut être égal à 0.

De préférence encore, le composé aldéhyde mono-aromatique peut être choisi parmi : le benzaldéhyde, le téréphthalaldéhyde, l'isophthalaldéhyde ou le trimésaldéhyde.

La mise en oeuvre de tels composés aldéhyde monoaromatiques permet avantageusement d'obtenir des résines phénoliques présentant d'excellentes propriétés de stabilité thermique et de charbonnement.

De manière particulièrement préférée, le composé aldéhyde mono-aromatique peut être choisi parmi : le téréphthalaldéhyde, l'isophthalaldéhyde ou le trimésaldéhyde.

Dans un exemple de réalisation, le composé phénolique peut être choisi parmi : les phénols simples et les composés polyphénoliques, par exemple les composés diphénoliques, les phénols et composés polyphénoliques pouvant éventuellement être substitués par des groupements alcoxyles par exemple.

Le composé phénolique peut, par exemple, être choisi parmi : le phénol, le pyrocatéchol, le crésol, le résorcinol, l'hydroquinone, le phloroglucinol, le pyrogallol, le guaiacol, le syringol, le bis-phénol A, le bis-phénol S, le para-hydroxybenzaldéhyde, la vanilline, l'alcool syringique, l'alcool paracoumarylique, l'alcool coniférylique, l'alcool sinapylique, l'acide férulique, l'acide para-hydroxybenzoïque, l'acide gallique, l'acide paracoumarique, l'eugénol, l'isoeugénol, les cardanols, les cardols, les acides anacardiques, la catéchine, l'ombelliférone, la juglone, le transresvératrol, le kaempférol, la daidzéine, le delphinidol, l'entérodiol, les lignines, les procyanidines, les gallotanins, les tanins condensés, les résines résoles et novolaques.

De préférence, le composé phénolique peut être choisi parmi : le phénol, le crésol, le résorcinol, le phloroglucinol, l'hydroquinone, le pyrogallol, le bis-phénol A, le bis-phénol S, le para-hydroxybenzaldéhyde, la vanilline, les résines résoles et novolaques.

De tels exemples de composés phénoliques peuvent être produits à partir de ressources renouvelables et peuvent avantageusement être mis en oeuvre dans le cadre de l'invention.

## Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels :

- les figures 1 et 2 représentent des résultats d'analyses thermogravimétriques comparant les propriétés de résines obtenues par mise en oeuvre d'étapes de pré-polymérisation et de cuisson selon l'invention avec celles de la résine Ablaphène RS 101.

## Exemples

*Exemple 1 : synthèse d'une résine phénolique de type résite en deux étapes sans formaldéhyde à partir de benzaldéhyde*

Une résine phénolique a été synthétisée sans formaldéhyde à partir de benzaldéhyde selon le protocole opératoire détaillé plus bas.

Le benzaldéhyde (7,9 g, 1,5 éq., 74 mmol), le phénol (4,7 g, 1 éq., 50 mmol) et l'hydroxyde de sodium en solution aqueuse à 50 % massique (0,65 g, 0,3 éq., 16 mmol) sont placés dans un ballon de 50 mL muni d'un réfrigérant sous agitation magnétique. Le ballon est plongé dans un bain d'huile thermostaté à 130°C pendant 30 minutes. A l'issue de cette réaction, le mélange est sous forme de résitol, homogène et visqueux. Il est récupéré, placé dans une coupelle en aluminium et cuit à l'étuve sous air suivant un programme de cuisson constitué d'une montée en température de 40°C à 180°C à la vitesse de 3°C/h et d'un isotherme de 24h à 180°C. Le matériau résite obtenu à l'issue de cette cuisson est noir, rigide et totalement insoluble dans l'acétone.

Cette réaction est résumée par la figure de synthèse ci-dessous.

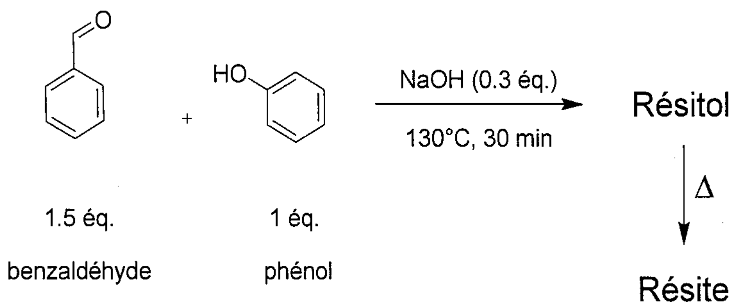


*Exemple 2 : synthèse d'une résine phénolique de type résite en deux étapes sans formaldéhyde à partir de téréphthalaldéhyde*

Une résine phénolique a été synthétisée sans formaldéhyde à partir de téréphthalaldéhyde selon le protocole opératoire détaillé plus bas.

Le téréphthalaldéhyde (5,0 g, 0,75 éq., 37 mmol), le phénol (4,7 g, 1 éq., 50 mmol) et l'hydroxyde de sodium en solution aqueuse à 50 % massique (0,65 g, 0,3 éq., 16 mmol) sont placés dans un ballon de 50 mL muni d'un réfrigérant sous agitation magnétique. Le ballon est plongé dans un bain d'huile thermostaté à 130°C pendant 15 minutes. A l'issue de cette réaction, le mélange est sous forme de résitol, homogène et visqueux. Ce résitol est soluble dans l'éthanol et l'acétone à température ambiante. Il est récupéré, placé dans une coupelle en aluminium et cuit à l'étuve sous air suivant un programme de cuisson constitué d'une montée en température de 40°C à 180°C à la vitesse de 3°C/h et d'un isotherme de 24h à 180°C. Le matériau résite obtenu à l'issue de cette cuisson est noir, rigide et totalement

insoluble dans l'éthanol et l'acétone.

Cette réaction est résumée par la figure de synthèse ci-dessous.

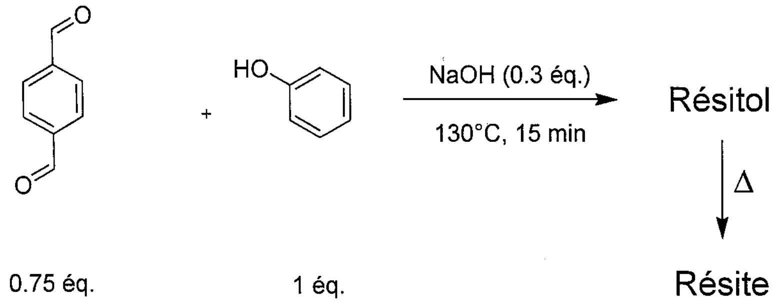


téréphthalaldéhyde phénol

*Exemple 3 : synthèse d'une résine phénolique de type résite en deux étapes sans formaldéhyde à partir d'isophthalaldéhyde.*

Une résine phénolique a été synthétisée sans formaldéhyde à partir d'isophthalaldéhyde selon le protocole opératoire détaillé plus bas.

L'isophthalaldéhyde (5,0 g, 0,75 éq., 37 mmol), le phénol (4,7 g, 1 éq., 50 mmol) et l'hydroxyde de sodium en solution aqueuse à 50 % massique (0,65 g, 0,3 éq., 16 mmol) sont placés dans un ballon de 50 mL muni d'un réfrigérant sous agitation magnétique. Le ballon est plongé dans un bain d'huile thermostaté à 130°C pendant 15 minutes. A l'issue de cette réaction, le mélange est sous forme de résitol, homogène et visqueux. Il est récupéré, placé dans une coupelle en aluminium et cuit à l'étuve sous air suivant un programme de cuisson constitué d'une montée en température de 40°C à 180°C à la vitesse de 3°C/h et d'un isotherme de 24h à 180°C. Le matériau résite obtenu à l'issue de cette cuisson est noir, rigide et totalement insoluble dans l'acétone.

Cette réaction est résumée par la figure de synthèse ci-dessous.

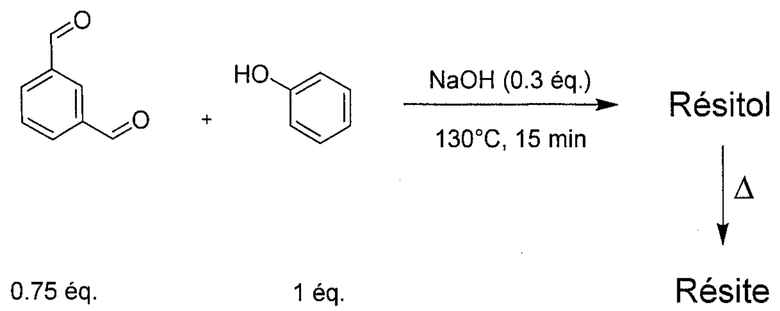


isophthalaldéhyde phénol

*Exemple 4 : synthèse d'une résine phénolique de type résite en deux étapes sans formaldéhyde à partir de trimésaldéhyde*

Une résine phénolique a été synthétisée sans formaldéhyde à partir de trimésaldéhyde selon le protocole opératoire détaillé plus bas.

Le trimésaldéhyde (1,07 g, 0,5 éq., 6,6 mmol), le phénol (1,24 g, 1 éq., 13,2 mmol) et l'hydroxyde de sodium en solution aqueuse à 50 % massique (0,16 g, 0,3 éq., 4 mmol) sont placés dans un ballon de 50 mL muni d'un réfrigérant sous agitation magnétique. Le ballon est plongé dans un bain d'huile thermostaté à 130°C pendant 5 minutes. A l'issue de cette réaction, le mélange est sous forme de résitol, homogène et visqueux. Il est récupéré, placé dans une coupelle en aluminium et cuit à l'étuve sous air suivant un programme de cuisson constitué d'une montée en température de 40°C à 180°C à la vitesse de 3°C/h et d'un isotherme de 24h à 180°C. Le matériau résite obtenu à l'issue de cette cuisson est noir, rigide et totalement insoluble dans l'acétone.

Cette réaction est résumée par la figure de synthèse ci-dessous.

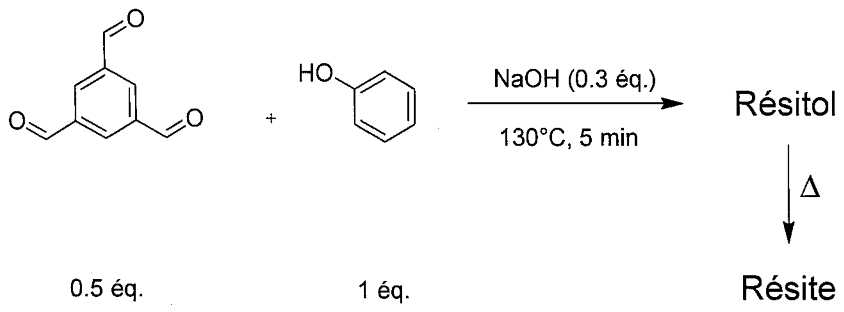


0.5 éq. trimésaldéhyde

1 éq. phénol

*Exemple 5: synthèse d'une résine phénolique de type résite à partir de la résine formophénolique Ablaphène RS101*

La résine formophénolique commerciale Ablaphène RS101 a été réticulée selon le protocole opératoire détaillé plus bas.

L'Ablaphène RS101 est placé dans une coupelle en aluminium et cuit à l'étuve sous air suivant un programme de cuisson constitué d'une montée en température de 40°C à 180°C à la vitesse de 3°C/h et d'un isotherme de 24h à 180°C. Le matériau résite obtenu à l'issue de cette cuisson est noir, rigide et totalement insoluble dans l'acétone.

Cette réaction est résumée par la figure de synthèse ci-dessous.

$$\text{Ablaphène RS101} \xrightarrow{\Delta} \text{Résite}$$

Les mesures de taux de coke des résites synthétisés ont été effectuées par analyses thermogravimétriques (ATG) sur un appareil Q50 commercialisé par la société TA Instrument. Un échantillon de résite sous forme monolithique de 30 mg est placé sur une nacelle en platine puis chauffé, sous un flux d'azote (60 mL/min) selon le programme suivant :

- montée linéaire de 20°C à 160°C à la vitesse de 10°C/min
- isotherme d'une heure à 160°C (mi)
- montée linéaire de 160°C à 900°C à la vitesse de 10°C/min
- isotherme d'une heure à 900°C (mf)

Le taux de coke est calculé selon l'équation suivante dans laquelle les grandeurs mi et mf correspondent aux masses de l'échantillon à la fin des isothermes à 160°C et 900°C respectivement :

$$\text{Taux de coke} = mf/mi$$

La figure 1 représente les résultats obtenus par ATG pour les résines synthétisées aux exemples 1 à 3 (résites benzaldéhyde, téréphthalaldéhyde et isophthalaldéhyde) en comparaison avec les résultats obtenus à l'exemple 5 (résite Ablaphène RS101).

La figure 2 représente les résultats obtenus par ATG pour les résines synthétisées aux exemples 1 et 4 (résites benzaldéhyde et trimésaldéhyde) en comparaison avec les résultats obtenus à l'exemple 5 (résite Ablaphène RS101).

Les taux de coke ainsi que les températures de dégradation à 10% massique (Td10%) des résines testées sont reportées au tableau 1 ci-dessous.

Tableau 1

| Exemple | Résite | Td10% | Taux de coke |
|---|---|---|---|
| 1 | Benzaldéhyde | 500°C | 58% |
| 2 | Téréphthalaldéhyde | 500°C | 69% |
| 3 | Isophthalaldéhyde | 570°C | 72% |

(suite)

| Exemple | Résite | Td10% | Taux de coke |
|---|---|---|---|
| 4 | Trimésaldéhyde | 480°C | 69% |
| 5 | Ablaphène RS101 | 395°C | 60% |

Ces résultats montrent que la mise en oeuvre d'un composé aldéhyde monoaromatique comme le benzaldéhyde permet d'obtenir une résine présentant une stabilité thermique améliorée par rapport à l'Ablaphène RS101 tout en s'affranchissant de l'utilisation de formaldéhyde. De plus, ces résultats montrent que les résines fabriquées sans formaldéhyde à partir des précurseurs aldéhyde di et trifonctionnels, téréphthalaldéhyde, isophthalaldéhyde et trimésaldéhyde, présentent des propriétés de stabilité thermique et de charbonnement significativement supérieures à celles de la résine Ablaphène RS101 de référence. Ce procédé donne donc accès à des résines phénoliques qui peuvent avantageusement substituer les résines formophénoliques conventionnelles pour l'élaboration de tuyères de propulseur.

L'expression « compris(e) entre ... et ... » ou « allant de ... à ... » doit se comprendre comme incluant les bornes.

## Revendications

1. Procédé de fabrication d'une tuyère de propulseur en matériau composite, le procédé comprenant au moins les étapes suivantes :

   - formation d'une préforme fibreuse de la tuyère à obtenir imprégnée par une résine phénolique pré-polymérisée, la résine phénolique pré-polymérisée étant obtenue par pré-polymérisation d'un composé aldéhyde mono-aromatique avec un composé phénolique différent d'un alcool hydroxybenzylique, le composé aldéhyde mono-aromatique ayant la formule suivante :

   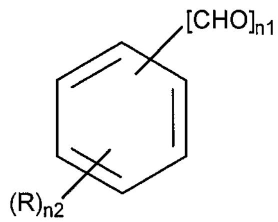

   formule dans laquelle n1 est un entier compris entre 1 et 3, n2 est un entier compris entre 0 et 5 et, lorsque n2 est supérieur ou égal à 2, les substituants R sont identiques ou différents, formule dans laquelle R est choisi parmi : -COOH, les groupements -O-Alk où Alk désigne une chaîne alkyle substituée ou non substituée de 1 à 4 atomes de carbone, les chaînes hydrocarbonées comprenant entre 1 et 20 atomes de carbone, saturées ou insaturées, substituées ou non substituées et présentant éventuellement une ou plusieurs fonctions carbonyle ou acide carboxylique, et
   - cuisson de la préforme fibreuse imprégnée de manière à réticuler la résine phénolique pré-polymérisée et obtenir la tuyère de propulseur.

2. Procédé selon la revendication 1, dans lequel n1 est égal à 2 ou à 3.

3. Procédé selon la revendication 2, dans lequel n1 est égal à 2.

4. Procédé selon l'une quelconque des revendications 1 à 3, dans lequel n2 est égal à 0.

5. Procédé selon la revendication 4, dans lequel le composé aldéhyde mono-aromatique est choisi parmi : le benzaldéhyde, le téréphthalaldéhyde, l'isophthalaldéhyde ou le trimésaldéhyde.

6. Procédé selon l'une quelconque des revendications 1 à 5, dans lequel le composé phénolique est choisi parmi : le phénol, le crésol, le résorcinol, le phloroglucinol, l'hydroquinone, le pyrogallol, le bis-phénol A, le bis-phénol S, le para-hydroxybenzaldéhyde, la vanilline et les résines résoles et novolaques.

## Patentansprüche

1. Verfahren zur Herstellung einer Schubdüse aus Verbundwerkstoff, wobei das Verfahren zumindest die folgenden Schritte umfasst:

   - Bilden einer faserigen Vorform der herzustellenden Düse, die mit einem vorpolymerisierten Phenolharz imprägniert ist, wobei das vorpolymerisierte Phenolharz durch Vorpolymerisieren einer monoaromatischen Aldehydverbindung mit einer von einem Hydroxybenzylalkohol verschiedenen Phenolverbindung erhalten wird, wobei die monoaromatische Aldehydverbindung die folgende Formel aufweist:

   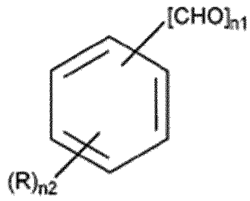

   wobei in der Formel n1 eine ganze Zahl zwischen 1 und 3 ist, n2 eine ganze Zahl zwischen 0 und 5 ist und, wenn n2 größer als oder gleich 2 ist, die Substituenten R gleich oder verschieden sind, wobei R ausgewählt ist aus: -COOH, -O-Alk-Gruppen, worin Alk eine substituierte oder unsubstituierte Alkylkette mit 1 bis 4 Kohlenstoffatomen bezeichnet, wobei die Kohlenwasserstoffketten zwischen 1 und 20 Kohlenstoffatome enthalten, gesättigt oder ungesättigt, substituiert oder unsubstituiert sind und gegebenenfalls eine oder mehrere Carbonyl- oder Carbonsäurefunktionen aufweisen, und
   - Brennen der imprägnierten faserigen Vorform, um das vorpolymerisierte Phenolharz zu vernetzen und die Schubdüse zu erhalten.

2. Verfahren gemäß Anspruch 1, wobei n1 2 oder 3 ist.

3. Verfahren gemäß Anspruch 2, wobei n1 2 ist.

4. Verfahren gemäß einem der Ansprüche 1 bis 3, wobei n2 0 ist.

5. Verfahren gemäß Anspruch 4, wobei die monoaromatische Aldehydverbindung ausgewählt ist aus: Benzaldehyd, Terephthalaldehyd, Isophthalaldehyd oder Trimesaldehyd.

6. Verfahren gemäß einem der Ansprüche 1 bis 5, wobei die Phenolverbindung ausgewählt ist aus: Phenol, Kresol, Resorcin, Phloroglucinol, Hydrochinon, Pyrogallol, Bisphenol A, Bisphenol S, para-Hydroxybenzaldehyd, Vanillin und Resol- und Novolakharzen.

## Claims

1. Method for producing a thruster nozzle from composite material, the method comprising at least the following steps:

   - forming a fiber preform of the nozzle to be obtained impregnated with a pre-polymerized phenolic resin, the pre-polymerized phenolic resin being obtained by pre-polymerizing a mono-aromatic aldehyde compound with a phenolic compound different from a hydroxybenzyl alcohol, the mono-aromatic aldehyde compound having the following formula:

   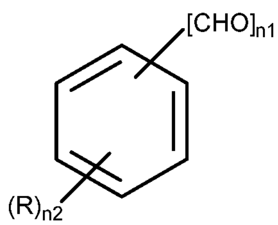

formula wherein n1 is an integer comprised between 1 and 3, n2 is an integer comprised between 0 and 5 and, when n2 is greater than or equal to 2, the substituents R are the same or different, formula wherein R is selected from : -COOH, -O-Alk groups where Alk denotes a substituted or unsubstituted alkyl chain of 1 to 4 carbon atoms, the hydrocarbon chains containing between 1 and 20 carbon atoms, saturated or unsaturated, substituted or unsubstituted and optionally having one or more carbonyl or carboxylic acid functions, and
- heating the impregnated fiber preform so as to cross-link the pre-polymerized phenolic resin and obtain the thruster nozzle.

**2.** Method according to claim 1, wherein n1 is equal to 2 or to 3.

**3.** Method according to claim 2, wherein n1 is equal to 2.

**4.** Method according to any one of claims 1 to 3, wherein n2 is equal to 0.

**5.** Method according to claim 4, wherein the mono-aromatic aldehyde compound is selected from: benzaldehyde, terephthalaldehyde, isophthalaldehyde or trimesaldehyde.

**6.** Method according to any one of claims 1 to 5, wherein the phenolic compound is selected from: phenol, cresol, resorcinol, phloroglucinol, hydroquinone, pyrogallol, bis-phenol A, bis-phenol S, parahydroxybenzaldehyde, vanillin, and resol and novolac resins.

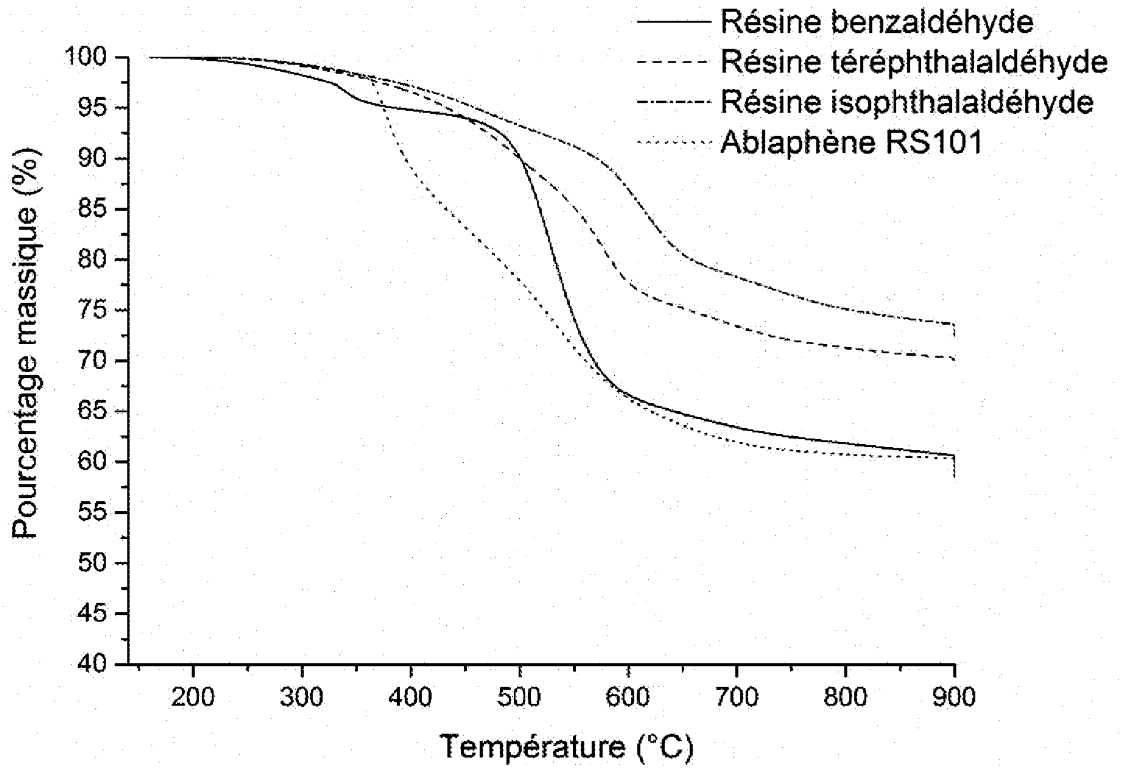
Résine benzaldéhyde
Résine téréphthalaldéhyde
Résine isophthalaldéhyde
Ablaphène RS101
Pourcentage massique (%)
Température (°C)
100
95
90
85
80
75
70
65
60
55
50
45
40
200
300
400
500
600
700
800
900

FIG.1

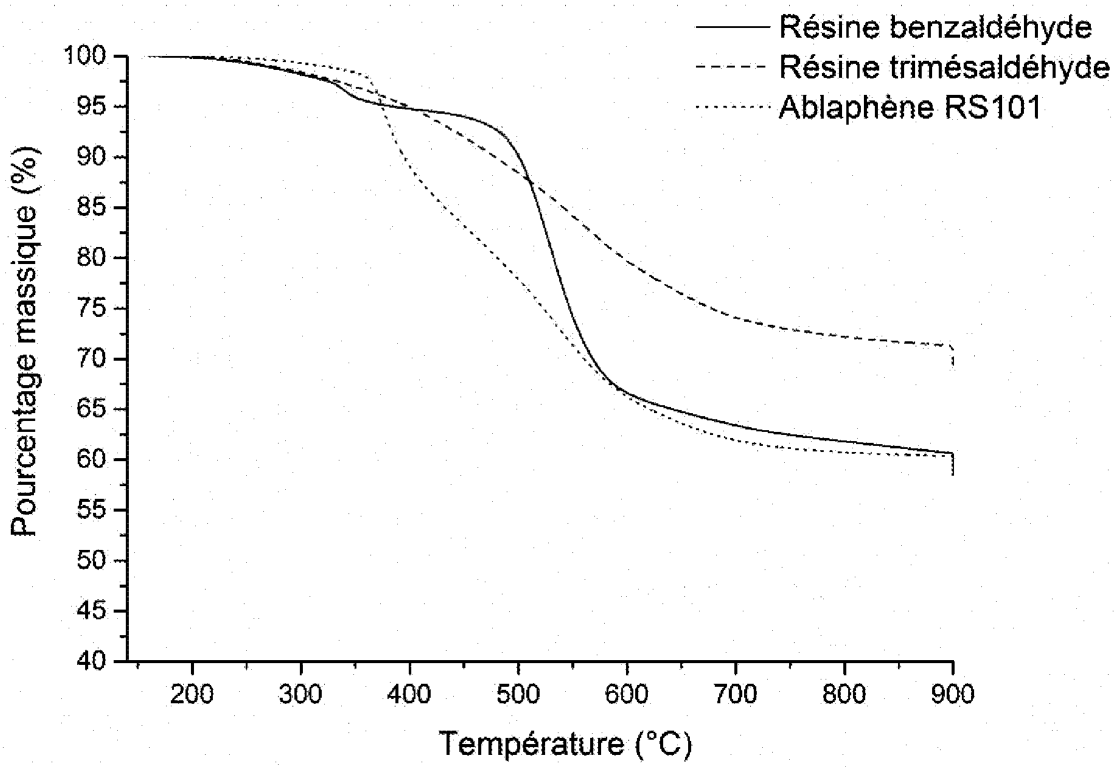
Résine benzaldéhyde
Résine trimésaldéhyde
Ablaphène RS101
Pourcentage massique (%)
Température (°C)
100
95
90
85
80
75
70
65
60
55
50
45
40
200
300
400
500
600
700
800
900

FIG.2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- JP 2010242671 A
- US 20060118232 A
- US 4495231 A
- US 5609806 A


### Littérature non-brevet citée dans la description


- **E.C. RAMIRES ; J.D. MEGIATTO ; C. GARDRAT ; A. CASTELLAN ; E. FROLLINI.** Biobased composites from glyoxal-phenolic resins and sisal fibers. *Bioresour. Technol.,* 2010, vol. 101, 1998-2006
- **L.H. BROWN.** Resin-forming reactions of furfural and phenol. *J. Ind. Eng. Chem.,* 1952, vol. 44, 2673-2675